# EUROPÄISCHE PATENTANMELDUNG

(11) **EP 2 421 143 A2**
(43) Veröffentlichungstag der Anmeldung: **22.02.2012**
(21) Anmeldenummer: 11172616.2
(22) Anmeldetag: 05.07.2011
(51) Int. Cl.: H02P 1/32, H01H 23/28

(54) **Verfahren zum Einschalten eines Drehstrommotors sowie Sterndreieck Motorschutz-Schalter mit automatischer Umschaltung von Stern auf Dreieckschaltung**

(30) Priorität: 15.07.2010 CH 11542010
(71) Anmelder: Britschgi, Josef, 6280 Hochdorf (CH)
(72) Erfinder: Britschgi, Josef, 6280 Hochdorf (CH)
(74) Vertreter: Felber, Josef

(57) **Zusammenfassung**

Der Sterndreieck Motorschutzschalter ist für das sanfte Anfahren von Drehstrommotoren bestimmt und bewirkt die automatische Umschaltung von der Stern- auf die Dreieckschaltung. Er besteht aus den drei Schützen K1, K2 und K3, aus mehreren Relais und Klemmen. Durch das stromlose und funkenfreie Einschalten des Stern- und des Dreieckschütz können diese mit einem grösseren Motornennstrom belastet werden, was die Verwendung von kleineren und preisgünstigeren Schützen erlaubt. Damit alle drei Schützen in der Standardausführung mit drei Hauptstrom- und einem Steuerstrom-Kontaktpaar verwendet werden können, wird für die Erstellung der Sternverbindung eine Schaltung wie beim Motorklemmbrett eingesetzt, mit der nur 2 x 2 Hauptstromkontakte für die Sternverbindung benötigt werden und ein Hauptstromkontaktpaar für den zusätzlich benötigten Steuerstromkontakt verwendet wird. Dieser Sterndreieck Motorschutzschalter kann in ein besonderes Motorschutzschalter-Gehäuse eingebaut werden. Dieses Gehäuse weist vier verschiebbare Befestigungslöcher auf, sodass es ohne mechanische Bearbeitung mit minimalem Zeitaufwand auf die Klemmenkastenrahmen von Drehstrommotoren verschiedenster Fabrikate, Baugrössen, Bauformen und Leistungen geschraubt werden kann.

## Beschreibung

Die Erfindung betrifft ein Verfahren zum sanften Einschalten eines Drehstrommotors, insbesondere eines Drehstrommotors mit einer Leistung ab 4kW, und ausserdem einen Sterndreieck Motorschutz-Schalter mit automatischer Umschaltung von der Stern- auf die Dreieckschaltung zur Umsetzung dieses Einschaltverfahrens. Diese Schalter können in ein Schaltergehäuse, in ein Tableau, in einen Schaltschrank oder in einen Schaltkasten von Maschinen eingebaut werden. Verfahrensgemäss wird mit speziellen Schützenschaltungen erreicht, dass das Stern- und das Dreieckschütz mit stromlosen Kontakten eingeschaltet werden.

Gemäss den Vorschriften der Stromversorger müssen Drehstrommotoren ab einer Leistung von 4 kW mit einem Sterndreieckschalter oder einem Sanftanlasser eingeschaltet werden. Beim Sterndreieckanlauf wird der Anlaufstrom und das Anlaufdrehmoment auf ein Drittel der Werte bei Direkteinschaltung reduziert, auf den zwei- bis dreifachen Anlaufstrom und auf das 0.7 bis 1.1-fache Anlaufdrehmoment, bezogen auf den Nennstrom und das Nenndrehmoment.

Die bisherigen Sterndreieck Motorschutzschalter mit automatischer Umschaltung von der Stern- auf die Dreieckschaltung werden mit einem Handgriff ein- und ausgeschaltet. Sie werden mit zum Teil über dreissig Jahre alten Konstruktionen gebaut. Nach dem Einschalten erfolgt die Umschaltung von der Stern- auf die Dreieckschaltung, und zwar nach Ablauf der an einem kleinen Schwungradgetriebe einstellbaren Zeit. Dabei wird über ein mechanisches Gestänge der Schalter von der Stern- auf die Dreieckposition umgeschaltet. Bei einem Stromausfall muss der Schaltergriff selbsttätig auf die ,Aus" Position gebracht werden. Dies geschieht durch ein kleines eingebautes Elektromagnet, das bei der Spannung Null über ein Gestänge durch eine gespannte Feder eine Klinke auslöst. In der Folge springt der Schaltergriff auf die Stellung "AUS".

Das Material, die Fertigung und die Montage der mechanischen Komponenten wie Schwungradgetriebe, Gestänge, kleiner Elektromagnet, Feder, Klinke und Handgriffmechanismus verursachen hohe Schalterkosten. Der Preis für die bisherigen Sterndreieck Motorschutzschalter mit Handgriffbetätigung und mit automatischer Umschaltung beträgt mehr als das Doppelte des Preises für einen vierpoligen 4 kW Motor!

Die Lebensdauer der bisherigen Schalter wird mit 20'0000 Schaltungen angegeben. Das ergibt bei Maschinen, die im Einschichtbetrieb von 8 Stunden 12 mal je Stunde eingeschaltet werden, eine Lebensdauer von 0,8 Jahren. Deshalb sind die bisherigen Schalter mit einem steckbaren Schaltersockel ausgerüstet, damit der Ausbau des defekten Schalters und der Einbau des neuen Schalters ohne grossen Aufwand erfolgen kann.

Drehstrommotoren können mit bis zur zweifachen Leistung überlastet werden. Dabei wird der Motorstrom auf mehr als den zweifachen Nennstrom erhöht. Die Wicklungstemperatur steigt mit dem Quadrat zum Strom, beim zweifachen Strom auf einen vierfachen Temperaturwert. Bei einer solchen Temperatur verbrennen in wenigen Minuten die Isolationen der Wicklung und der Motor muss neu gewickelt oder ersetzt werden. Meistens sind die Motorwicklungen für eine Temperatur von 140°C ausgelegt. Wird diese dauernd um 10°C überschritten, reduziert sich die Wicklungslebensdauer gemäss der Regel von Montsinger auf die Hälfte. Über 60% der Motorausfälle sind auf die Überhitzung der Motorwicklung zurückzuführen. Jeder Drehstrommotor muss mit einem zuverlässigen Motorschutzschalter geschützt werden. Bei den bisherigen Sterndreieck Motorschutzschaltern wird für den Motorschutz die Stromüberwachung eingesetzt. Dabei wird bei einer Belastung von bis zum 1,05-fachen Motorstrom der Motor nicht ausgeschaltet. In der Folge steigt die Wicklungstemperatur auf 1,05² = 1,1 x 140 = 154°C und die zulässige Wicklungstemperatur wird um 14°C überschritten. Dadurch wird die Lebensdauer der Wicklung auf weniger als 50% reduziert. Zum Glück fordern nicht alle anzutreibenden Maschinen eine dauernde Motorleistung von 105%. Erst bei der Last mit dem 1,2-fachen Motorstrom wird der Schaltergriff über ein mechanisches Gestänge innerhalb von zwei Stunden auf die Stellung "Aus" gebracht und vorher steigt die Wicklungstemperatur um den Faktor 1,2² = 1,44 von 140 auf 201° C. Diese Temperaturerhöhung tritt nicht dauernd, sondern während weniger als zwei Stunden auf. Auch hier wird die Lebensdauer der Wicklung reduziert. Nach dem erfolgten Ausschalten des Motors infolge der 1,2-fachen Überlast kann der Motor erst wieder eingeschaltet werden, wenn sich die Bimetallelemente abgekühlt haben. Da die Abkühlung der Motorwicklung viel träger ist und länger dauert als die der kleinen Bimetallelemente, kann der Motor schon wieder eingeschaltet werden, auch wenn sich die Wicklung noch nicht auf 140°C abgekühlt hat. Ein weiterer Nachteil der Stromüberwachung ist, dass der Motor bei einer zu hohen Motorumgebungstemperatur nicht geschützt ist. Bei einer zu hohen Motorumgebungstemperatur oder wenn die Luftwege des Motorventilators durch Heu, Stroh, Sägemehl oder Staub verstopft sind, erfolgt in beiden Fällen kein Stromanstieg und somit keine Ausschaltung. Die Stromüberwachung ist deshalb ein schlechter und nur teilweiser Motorschutz.

Selten werden anstelle der handbetätigten Sterndreieck-Motorschutzschalter mit Schützen geschaltete Geräte eingesetzt. Diese werden von den führenden Schützenlieferanten als Sterndreieck-Schützenkombinationen auf einer Hutschiene oder einer Grundplatte montiert und ohne Gehäuse für den Eigenbau geliefert. Deren Stern- und Dreieckschütz werden mit stromführenden Kontakten geschaltet. Sie sind für den Einbau in einen Schaltschrank oder in Schaltkästen von Maschinen geeignet. Mitgeliefert wird ein elektronisches Zeitrelais, einstellbar von 2-30 Sekunden, zur Umschaltung von der Stern- auf die Dreieckschaltung. Auch hier wird der Motorstrom durch Bimetall-Elemente überwacht. Vereinzelt werden diese Sterndreieck Schützenkombinationen für den Betrieb mit Wicklungstemperaturwächtern geliefert, wobei durch die Überwachung der Wicklungstemperatur statt der Überwachung des Stroms der Motorschutz ganz gewaltig verbessert wird.

Bei der Konstruktion eines Motorschutzschalters müssen die Forderungen des zu schaltenden Drehstrommotors an den Schalter berücksichtigt werden, wobei zuvor die Forderungen der anzutreibenden Maschine an den Motor berücksichtigt werden müssen. Das Sterndreieck Anlaufverfahren kann für Maschinen angewendet werden, die im Leerlauf, also ohne Belastung an- und hochlaufen. Es ist dies bei über fünfzig Prozent aller Maschinen der Fall, zum Beispiel bei Maschinen für die Metall- und Holzbearbeitung, bei Bohrmaschinen, Fräsmaschinen, Schleifmaschinen, Drehbänken, Hohnmaschinen, Bügelsägemaschinen, Holzspaltmaschinen, Hobelmaschinen, hydraulischen Pressen, Stanzwerken, Walzwerken usw. Der Sterndreieckanlauf ist auch für Maschinen mit Zentrifugalwirkung geeignet, deren Wirkungsgrad über 70% liegt. Bei diesen verändert sich das Hochlaufdrehmoment im Quadrat zur Drehzahl und deren Leistung wird mit der dritten Potenz zur Drehzahl erhöht. Es sind dies Fördergeräte für Luft, Gase und Flüssigkeiten, wie Ventilatoren und Gebläse sowie die Zentrifugalpumpen und die Schiffs- und Flugzeugpropeller. Bei diesen Antrieben sollte der Motor beim Hochlauf in der Sternschaltung mindestens 80% der Nenndrehzahl erreichen, bevor auf die Dreieckschaltung umgeschaltet wird. Der Motor muss beim Hochlauf ein höheres Drehmoment erbringen, als das von der anzutreibenden Maschine geforderte. Das Umschaltzeitrelais soll von 2 bis 30 Sekunden einstellbar sein. Es ist die Zeit einzustellen, die ab der Einschaltung vergeht, bis die Drehzahl in der Sternschaltung nicht mehr weiter ansteigt. Erst dann darf auf die Dreieckschaltung umgeschaltet werden. Ein zu frühes Umschalten auf die Dreieckschaltung bewirkt einen hohen Umschaltstrom.

Die Aufgabe der vorliegenden Erfindung ist es eingedenk der obigen Ausführungen, einerseits ein Verfahren zum Einschalten eines Drehstrommotors anzugeben, welches ein sanftes Anfahren ermöglicht und einen besseren Motorschutz bietet. Ausserdem ist es des Weiteren eine Aufgabe der Erfindung, einen Sterndreieck Motorschutz-Schalter mit automatischer Umschaltung von Sternauf Dreieckschaltung anzugeben, welcher besonders betriebssicher ist und ausserdem viel kostengünstiger als herkömmliche Schalter herstellbar und einbaubar ist.

Die Aufgabe wird gelöst von einem Verfahren zum Einschalten eines Drehstrommotors mit einem Sterndreieck Motorschutz-Schalter mit automatischer Umschaltung von Stern auf Dreieckschaltung, gekennzeichnet durch folgende Schritte:
a) Einschalten des Sternschütz mit stromlosen Kontakten,
b) Einschalten des Netzschütz mit stromführenden Kontakten, wonach der Motor mit der am Zeitrelais eingestellten Hochlaufzeit auf etwa 80% der Nenndrehzahl hochläuft,
c) Ausschalten des Sternschütz und des Netzschütz durch das Zeitrelais,
d) Einschalten des Dreieckschütz mit stromlosen Kontakten,
e) Einschalten des Netzschütz mit stromführenden Kontakten, wonach der Motor auf seine Nenndrehzahl hochläuft.

Die Aufgabe wird andrerseits gelöst von einem Sterndreieck Motorschutz-Schalter mit automatischer Umschaltung von Stern auf Dreieckschaltung zum Betreiben des obigen Verfahrens, der sich dadurch auszeichnet, dass die Schützen so geschaltet sind, dass das Stern- und das Dreieckschütz mit stromlosen Kontakten einschaltbar sind, wodurch diese mit einem grösseren Strom belastbar sind und daher Stern- und Dreieckschützen mit dieser Schaltung eingebaut sind.

Weil erfindungsgemäss die beiden Schützen mit stromlosen und funkenfreien Kontakten eingeschaltet werden, können sie mit einem grösseren Strom belastet werden. Dadurch können kleinere, preisgünstigere Stern- und Dreieckschützen eingebaut werden. Für die herkömmlichen Sterndreieckschalter mit Handgriffbetätigung wird die Lebensdauer mit 20'000 Schaltungen angegeben. Bei den Schützen hingegen beträgt diese 300'000 Schaltungen. Das ist das Fünfzehnfache, und entspricht einer Steigerung der Lebensdauer von zum Beispiel 0.8 Jahren auf 12 Jahre.
Das Verfahren zum Einschalten eines Drehstrommotors sowie die hier für nötigen Sterndreieck Motorschutz-Schalter mit automatischer Umschaltung von Stern- auf Dreieckschaltung werden mit drei verschiedenen Motorschutzarten anhand der folgenden Schaltungs-Zeichnungen vorgestellt, dann mit einer herkömmlichen Schaltung verglichen und beschrieben.
Es zeigt:
Figur 1: Eine Schaltung mit den Bimetall Temperaturwächtern;
Figur 2: Eine Schaltung mit den PTC Kaltleiter Temperaturwächtern;
Figur 3: Eine Schaltung mit den Bimetall Stromwächter Relais;
Figur 4: Eine herkömmliche Schützen-Sternschaltung mit 3 x 2 Kontakten;
Figur 5: Motor Klemmenbrett-Schaltungen;
Figur 6: Eine Schützen-Sternschaltung mit 2 x 2 Kontakten.

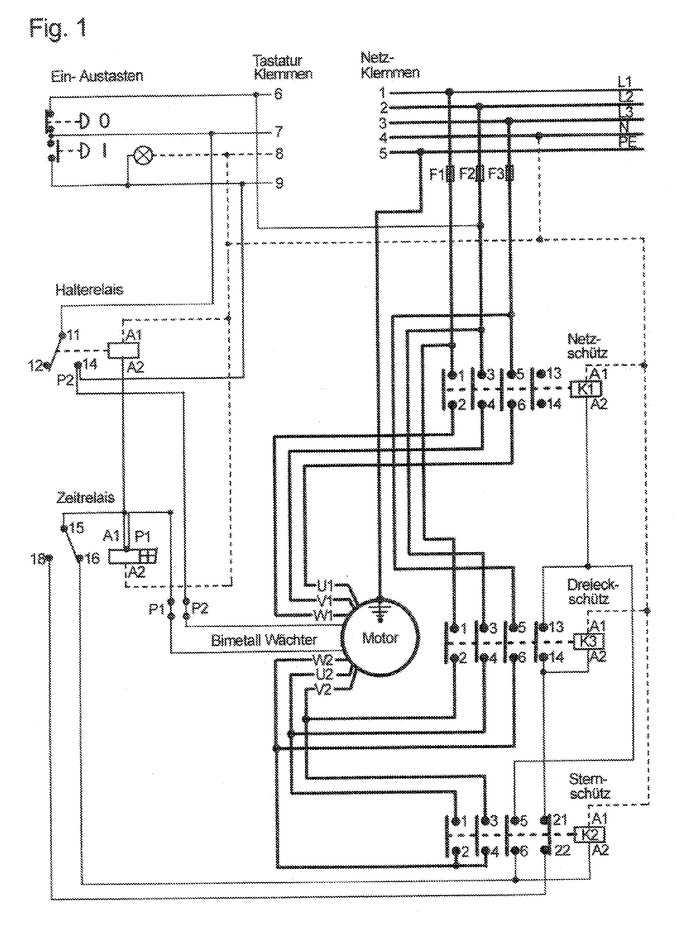

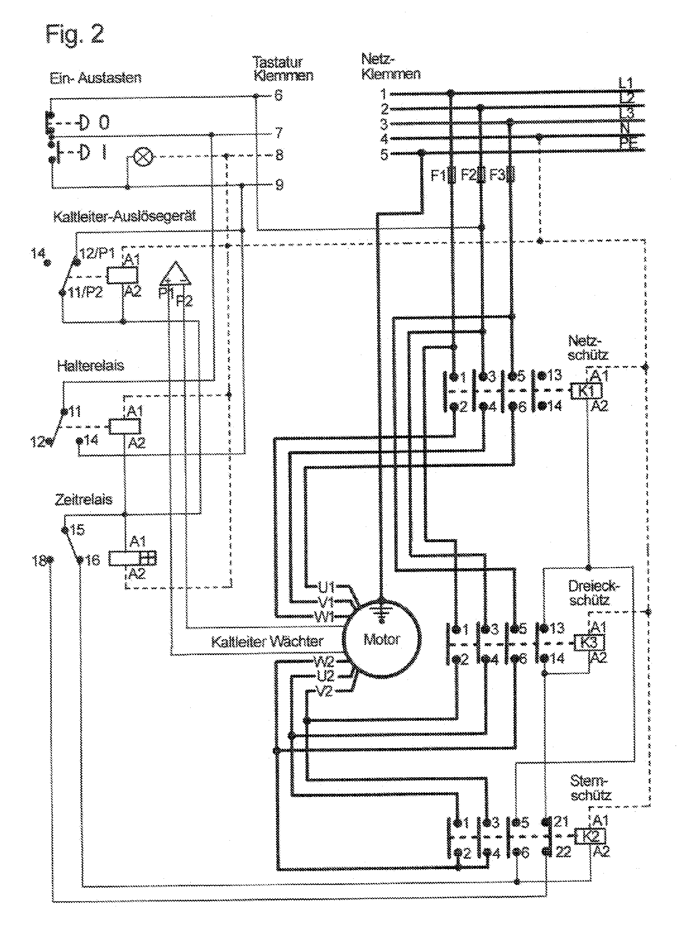

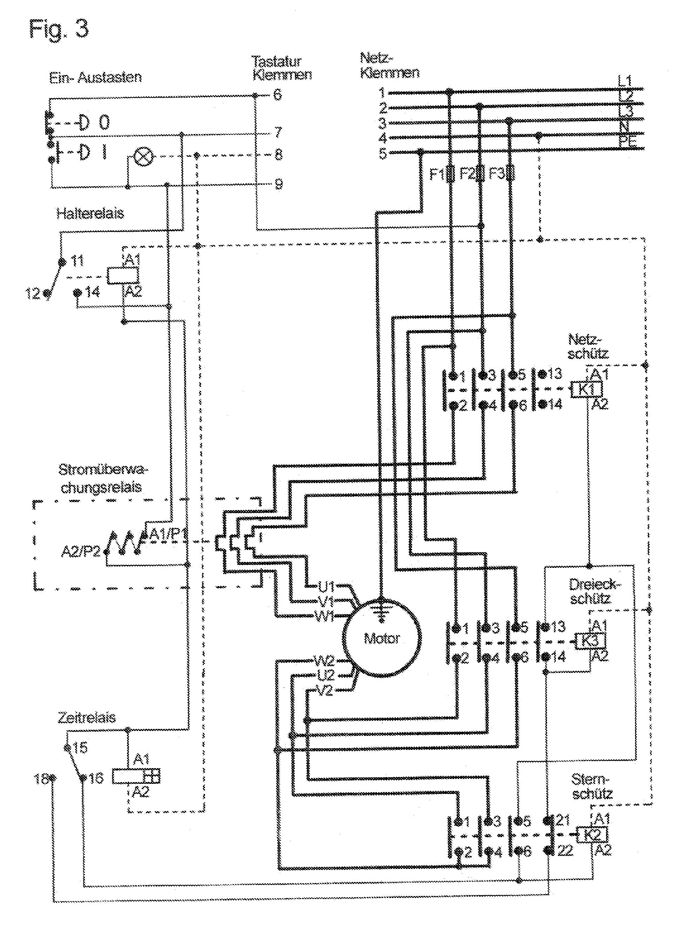

Bei den herkömmlichen Schaltungen der Sterndreieck Schützen werden für die Sternverbindungen am Sternschütz 3 x 2 Hauptstromkontakte benötigt. Neu werden die Sternverbindungen der Motor Klemmenbrett-Schaltung mit Kupferblechstreifen mit 2 x 2 Kontakten ins Schema übernommen. Es kann nun das Sternschütz wie das Dreieck- und das Netzschütz mit 3 x 2 Hauptstromkontakten und mit 1 x 2 Steuerstromkontakten eingebaut werden. Dabei werden aber 1 x 2 Hauptstromkontakte für den Steuerstrom verwendet. Der erfindungsgemässe Sterndreieck Motorschutzschalter wird in der Standardausführung für den Motorschutz mit Temperaturüberwachung geliefert. Für diese gibt es ein Schaltschema für Bimetall Temperaturwächter wie in Figur 1 gezeigt, und ein Schema für PTC Kaltleiter Temperaturwächter wie in Figur 2 gezeigt. Die Bimetall Temperaturwächter-Elemente schalten die Schützen "Aus" und "Ein". Es ist dies die preisgünstigste Lösung. Bei den Kaltleiter-Temperaturwächtern muss neben den Schützen ein Kaltleiter-Auslösegerät für das Aus- und Einschalten der Schützen eingebaut werden. Dies ergibt einen höheren Preis. In beiden Fällen müssen in die Wicklung des Motors drei Bimetall- oder Kaltleiter-Temperaturwächter eingebaut sein. Um auch die Motoren, deren Wicklung keine eingebauten Temperaturwächter besitzen, an die erfindungsgemässen Sterndreieck Motorschutzschalter anschliessen zu können, wurde ein drittes Schaltschema gemäss Figur 3 für den Anschluss an den schlechten und nur teilweisen Motorschutz für die Stromüberwachung mittels eines Stromüberwachungsrelais aufgezeigt. Wie beim Schema nach Figur 2 für Kaltleiter muss auch hier ein zusätzliches Steuergerät in Form eines Bimetall Überlastrelais mit einer Skala für den einzustellenden Motornennstrom eingebaut werden, was den Preis beeinflusst.

Die erfindungsgemässen Schalter können in zwei Ausführungen geliefert werden:
1. Als Standardausführung werden in der Praxis von 100 gelieferten Sterndreieck-Motorschutzschaltern über 90 Schalter in ein Gehäuse eingebaut geliefert. Dafür wurde ein spezielles Alu-Pressgussgehäuse mit vier verschiebbaren Befestigungslöchern entwickelt, sodass dieses ohne mechanische Bearbeitung mit minimalem Zeitaufwand auf die Klemmenkastenrahmen von Drehstrommotoren verschiedenster Fabrikate, Baugrössen, Bauformen und Leistungen geschraubt werden kann. Dieses Gehäuse ist Gegenstand einer gesonderten Patentanmeldung.
2. Als Einbaukomponenten werden in der Praxis von 100 gelieferten Sterndreieck Motorschutzschalter weniger als 10 Schalter ohne Gehäuse geliefert. Die Komponenten bestehen aus zwei miteinander verbundenen Hutschienen, mit den verdrahteten Schützen, Relais und Klemmen. Sie können in ein Tableau, in einen Schaltschrank oder in einen Schaltkasten von Maschinen eingebaut werden.
Mit der Standardausführung mit Gehäuse und mit der Ausführung Einbaukomponente ohne Gehäuse wird ein kleines Tastaturgehäuse zur Fernbedienung des Schalters mitgeliefert. Dieses kann an das Schaltergehäuse angeschraubt werden, oder wenn der Motor mit dem Schalter sich an einem schlecht zugänglichen Ort befindet, kann dieses an einem gut zugänglichen Ort montiert werden.

Beim in ein Gehäuse eingebauten Sterndreieck Motorschutzschalter kann der Motor je nach Standort der anzutreibenden Maschine mit den Tasten "I" und "0" im kleinen Tastaturgehäuse ein- und ausgeschaltet werden. Das kleine Tastaturgehäuse kann entweder seitlich an das Sterndreieck Motorschutzschaltergehäuse angeschraubt werden, oder wenn der Motor mit dem aufgebauten Sterndreieck Motorschutzschalter sich an einem für den Bediener schlecht zugänglichen Ort befindet, kann es an einem gut erreichbaren Ort, an eine Wand oder in einem Tableau angeschraubt werden. Für die Verbindungen vom Sterndreieck Motorschutzschalter zum Tastaturgehäuse müssen dabei nur vier 1,5 mm² Leiter für den Steuerstrom installiert werden. Wenn aber in einem bisherigen Sterndreieck Motorschutzschalter die Ein-/Aus-Tasten fest eingebaut sind und der Schalter fernab vom Motor bedient und montiert werden muss, müssen bei einem 45 kW Motor sieben 16 mm² Hauptstromleiter plus zwei 1,5 mm² Steuerstromleiter vom Schalter zum Motor installiert werden, was hohe Kosten verursacht.

Bei den Schützenschaltungen für die erfindungsgemäss Sterndreieck Motorschutzschalter werden drei Drehstromschützen mit drei Hauptstrom-Schliesskontaktpaaren 1-2, 3-4 und 5-6 und mit einem Steuerstrom Kontaktpaar eingebaut. Bei diesen sind die Steuerstrom Schliesskontakte mit 11-12 und die Steuerstrom Öffnerkontakte mit 21-22 bezeichnet.

Die von den Schützen zu schaltenden Ströme werden in zwei Gebrauchskategorien AC-1 und AC-3 eingeteilt. Diese unterscheiden sich durch die Höhe des zulässigen Bemessungsstroms und durch die Höhe des Anlaufstroms. In einer Tabelle werden die Gebrauchskategoriewerte bei 3 x 400 Volt für die Schützen der Firma ABB gezeigt. Sie müssen dem Datenblatt des jeweiligen Schützenproduzenten entnommen werden.
Die verwendeten Abkürzungen:

| | |
|---|---|
| GK = Gebrauchskategorie | TU Umgebungstemperatur |
| IA = Anlaufstrom | IB = Bemerkungen |

| **GK:** | **TU:** | **IB:** | **IA:** |
|---|---|---|---|
| AC-1 | =<40°C | 170-200%, d.h. 17-20 Amp statt 10 Amp | 1 x IB |
| AC-3 | =<55°C | 100%, d.h. 10 Amp | 6xIB |

Gebrauchskategorien der Schützen der erfindungsgemässen Sterndreieck Motorschutzschalter, gemäss den Schemas der Figuren 1, 2 und 3.
- Netzschütz K1: = Gebrauchskategorie AC-3
- Dreieckschütz K3: = Gebrauchskategorie AC-1
- Sternschütz K2: = Gebrauchskategorie AC-1

Die Stromkreise sind in den Schemas unterschiedlich dargestellt.

| Stromkreis: | Ab Klemme: | Darstellung der Linien: |
|---|---|---|
| Steuerstromkreis Leiter | L2 | dünne Linie 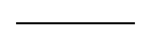 |
| Steuerstromkreis Nullleiter | N | punktiert 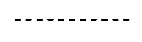 |
| Hauptstromkreis Leiter | L1, L2 und L3 | dicke Linie 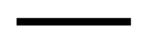 |
| Hauptstromkreis Erdung | PE | dicke Linie 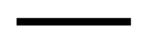 |

Mit dem Nullleiter N des Drehstromnetzes fest verbunden ist einer der beiden Steuerstromanschlüsse der Glimmlampe, der drei Schützen, aller Relais und des Kaltleiter-Auslösegerätes.

Beschreibung der Komponenten im Schema Figur 1 für die Bimetall Temperaturüberwachung:
Rechte Schemaseite oben: Grosse Netz-Klemmen 1 - 5
Darunter: Netzschütz K1 mit den Klemmen 1, 2, 3, 4, 5. 6, 13 & 14
Darunter: Dreieckschütz K3 mit den Klemmen 1, 2, 3, 4, 5, 6, 13 & 14
Darunter: Sternschütz K2 mit den Klemmen 1, 2, 3, 4, 5, 6, 21 & 22
Linke Seite oben: Ein- und Austasten, Glimmlampe und kleine Klemmen 6-9
Darunter: Elektronisches Halterelais, mit den Klemmen 11, 12 und 14
Darunter: Elektronische Zeitrelais, für 2-30 Sekunden & Klemmen 15,16 und 18

Komponenten im Schema Figur 2 für die Kaltleiter-Temperaturüberwachung:
Rechte Schemaseite oben: Grosse Netz-Klemmen 1 - 5
Darunter: Netzschütz K1, mit den Klemmen 1, 2, 3, 4, 5, 6, 13 & 14
Darunter: Dreieckschütz K3, mit den Klemmen 1, 2, 3, 4, 5, 6, 13 & 14
Darunter: Sternschütz K2, mit den Klemmen 1, 2, 3, 4, 5, 6, 21 & 22
Linke Seite oben: Ein- und Austasten, Glimmlampe und kleine Klemmen 6-9
Darunter: Elektronisches Kaltleiter-Auslösegerät, mit den Klemmen 11, 12 und 14
Darunter: Elektronisches Halterelais, mit den Klemmen 11, 12 und 14
Darunter: Elektronische Zeitrelais, für 2-30 Sekunden & Klemmen 15,16 und 18

Komponenten im Schema Figur 3 für die Stromüberwachung mittels Stromüberwachungsrelais:
Rechte Schemaseite oben: Grosse Netz-Klemmen 1-5
Darunter: Netzschütz K1 mit den Klemmen 1, 2, 3, 4, 5, 6, 13 & 14
Darunter: Dreieckschütz K3 mit den Klemmen 1, 2, 3, 4, 5, 6, 13 & 14
Darunter: Sternschütz K2 mit den Klemmen 1, 2, 3, 4, 5, 6, 21 & 22
Linke Seite oben: Ein- und Austasten, Glimmlampe und kleine Klemmen 6-9
Darunter: Elektronisches Halterelais mit den Klemmen 11, 12 und 14
Darunter: Thermisches Stromüberwachungsrelais
Darunter: Elektronische Zeitrelais für 2-30 Sekunden & Klemmen 15, 16 und 18

Bei den bisherigen, ohne Gehäuse gelieferten Schützenkombinationen für den Selbstbau wurden die Schützen in folgender Reihenfolge geschaltet:
1. Einschalten des Netzschütz mit stromlosen Kontakten.
2. Einschalten des Sternschütz mit stromführenden Kontakten: Der Motor läuft mit der am Zeitrelais eingestellten Hochlaufzeit auf etwa 80% der Nenndrehzahl hoch.
3. Das Sternschütz wird durch das Zeitrelais ausgeschaltet, das Netzschütz bleibt eingeschaltet.
4. Einschalten des Dreieckschütz mit stromführenden Kontakten: Der Motor läuft auf seine Nenndrehzahl hoch.

Bei den erfindungsgemässen Sterndreieck-Motorschutzschalter werden die Schützen hingegen in folgender Reihenfolge geschaltet:
1. Einschalten des Sternschütz mit stromlosen Kontakten.
2. Einschalten des Netzschütz mit stromführenden Kontakten: Der Motor läuft mit der am Zeitrelais eingestellten Hochlaufzeit auf etwa 80% der Nenndrehzahl hoch.
3. Das Sternschütz und das Netzschütz werden durch das Zeitrelais ausgeschaltet.
4. Das Dreieckschütz wird mit stromlosen Kontakten eingeschaltet.
5. Das Netzschütz wird mit stromführenden Kontakten eingeschaltet: Der Motor läuft auf seine Nenndrehzahl hoch.

Zum Einschalten des Motors wird die Einschalttaste "I" gedrückt. Über die Klemme 9 und über die Motorschutz Anschlüsse P2 und P1 werden die Glimmlampe, das Halterelais und des Zeitrelais eingeschaltet. Die Halterelaiskontakte 11-14 sind parallel zu den Kontakten 7-9 der Einschalttaste "I" geschaltet und beim Einschalten werden sie geschlossen und bleiben geschlossen, auch wenn die Einschalttaste losgelassen wird. Durch das Einschalten des Zeitrelais beginnt nur dessen Zeituhr zu laufen, die geschlossenen Kontakte 15-16 bleiben geschlossen und über diese wird das Sternschütz K2 mit stromlosen und funkenfreien Kontakten eingeschaltet.

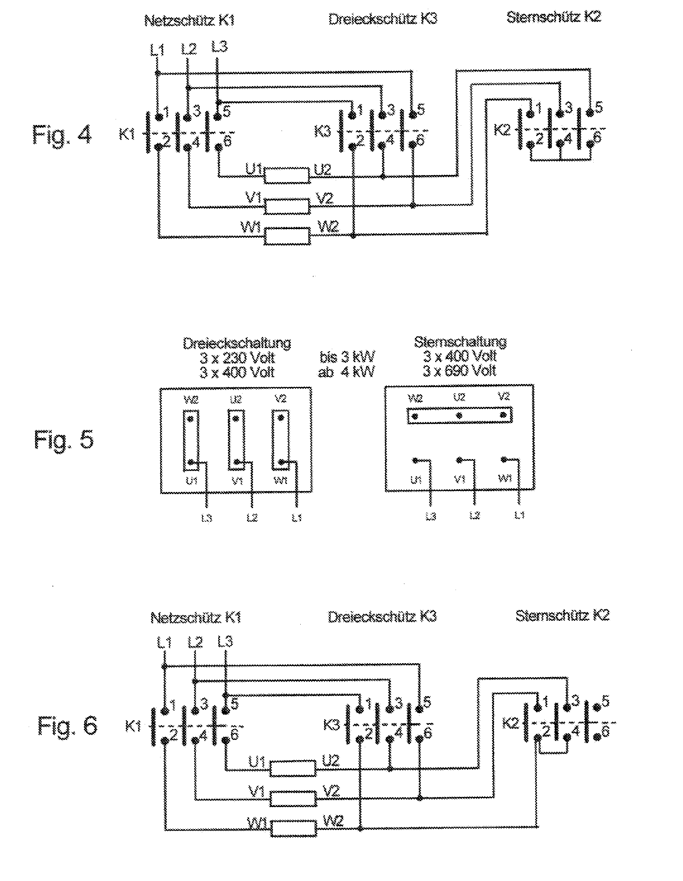

Beim Sternschütz wird für die Verbindungen des Sternpunktes eine Schaltung angewendet, bei der die gleiche Anzahl Kontakte benötigt wird wie beim Dreieck- und dem Netzschütz. Bei den bisherigen Sternschützschaltungen gemäss der Figur 4 werden 3 x 2 Hauptstromkontakte benötigt. Mit der erfindungsgemässen Sternschützschaltung wird gemäss den Klemmenbrett-Schaltungen entsprechend der Figur 5 ein Schema erstellt, mit dem mit nur 2 x 2 Kontakten die Sternverbindungen gemäss Figur 6 erstellt werden können.

Über die geschlossenen Sternschützkontakte 6-5 wird das Netzschütz K1 mit stromführenden Kontakten mit dem Anlaufstrom von bis zum dreifachen Motornennstrom eingeschaltet. Dabei werden die Wicklungsanfänge U1, V1 und W1, mit den Netzzuleitungen L3, L2 und L1 verbunden und der Motor läuft auf etwa 80% seiner Nenndrehzahl hoch.

Im Folgenden wird Bezug genommen auf die Figuren 1 bis 3: Nach dem Ablauf der am Zeitrelais eingestellten Hochlaufzeit wird durch die nun geöffneten Zeitrelaiskontakte 15-16 das Sternschütz K2 ausgeschaltet. Durch die geöffneten Sternschützkontakte 6-5 wird auch das Netzschütz ausgeschaltet und die Verbindungen zu den drei Netzzuleitungen L3, L2 und L1, werden unterbrochen.

Die Umschaltung auf die Dreieckschaltung erfolgt nur 50 Millisekunden nach dem Ausschalten des Sternschütz. Durch die Zeitrelaiskontakte 15-18, über die geschlossenen Sternschützkontakte 22-21, wird das Dreieckschütz mit stromlosen und funkenfreien Kontakten eingeschaltet. Die Sternschützkontakte 22-21 wirken als elektrische Einschaltsperre, durch die das Dreieckschütz erst eingeschaltet werden kann, wenn das Sternschütz ganz ausgeschaltet ist. Beim Einschalten des Dreieckschütz werden die Wicklungsanfänge U1, V1 und W2 mit den Wicklungsenden W2, U2 und V2 zur Dreieckschaltung verbunden. Über die geschlossenen Dreieckschützkontakte 13-14 wird das Netzschütz K1 mit einem Umschaltstrom vom bis zum vierfachen Motornennstrom eingeschaltet und der Motor läuft auf seine Nenndrehzahl hoch.

Nach dem Drücken der Ausschalttaste "0" wird der Steuerstrom zu allen Schützen, zu den Relais, zum Kaltleiter-Auslösegerät wenn vorhanden, und zur Glimmlampe unterbrochen und der Motor wird ausgeschaltet, unabhängig davon, in welchem Betriebszustand die Ausschaltung erfolgte. Bei einem Spannungsausfall erfolgt die Ausschaltung so wie beim Drücken der Ausschalttaste "0". Die Funktion der beiden Motorschutzarten und deren Vor- und Nachteile wird im anschliessenden Text beschrieben. Beim Motorschutz durch die Temperaturüberwachung wird der Motor ausgeschaltet, wenn die zulässige Wicklungstemperatur um 5° C überschritten wird, sei es wegen Überlast, zu hoher Schalthäufigkeit, bei Schweranlauf, bei Unter-oder Überspannung, bei Stromunterbruch in einer Phase, bei zu hoher Umgebungstemperatur und bei Verstopfung der Luftwege des Motorventilators durch Heu, Stroh, Sägemehl und Staub. Beim Motorschutz durch die Stromüberwachung hingegen wird nur bei einer Überlast auf den 1,2-fachen Motornennstrom und dann erst innerhalb von zwei Stunden ausgeschaltet. Ausgeschaltet wird auch bei einem Netzspannungsausfall. Nicht ausgeschaltet wird jedoch bei einer zu hohen Motorumgebungstemperatur und wenn die Luftwege des Motorventilators durch Heu, Stroh, Sägemehl oder Staub verstopft sind.

Zum Wiedereinschalten des Motors ist die Einschalttaste "I" zu drücken. Wenn die Ausschaltung wegen zu hoher Wicklungstemperatur erfolgte, ist die Ursache der Störung zu beheben. Anschliessend kann der Motor im Fall einer Temperaturüberwachung erst nach dem Abkühlen der Wicklung und im Fall einer Stromüberwachung schon nach dem Abkühlen der Bimetallstreifen des Bimetall Relais mit der Einschalttaste wieder eingeschaltet werden kann.

Schutzarten und Komponenten für den Motorschutz:
- Temperatur Überwachung:: Bimetall Temperaturwächter oder
- Temperatur Überwachung:: Kaltleiter Temperaturwächter und Auslösegerät
- Strom Überwachung:: Thermische Überlast-Bimetall Stromrelais
Die Temperaturwächter-Anschlüsse sind in den Schemas gemäss den Figuren 1 bis 3 mit P1 und P2 bezeichnet.

Die in der Folge aufgezeigten Motorschutz Verfahren sind schon länger bekannt. Der für die erfindungsgemässen Sterndreieck Motorschutzschalter bevorzugte Motorschutz mit Temperaturüberwachung bringt sehr viele Vorteile. Die Vor- und Nachteile beider Verfahren werden im Folgenden aufgezeigt. Die Hauptaufgabe des Motorschutzes ist es, die Motorwicklung vor zu hohen Temperaturen zu schützen. Beim neuen Motorschutzschalter wird der bestmögliche Motorschutz durch die Temperaturüberwachung als Standardausführung eingesetzt. Die Temperaturüberwachung kann, aber nur bei Drehstrommotoren, mit in der Wicklung eingebauten Bimetall- oder Kaltleiter Temperaturwächtern realisiert werden.

Der Bimetall Temperaturwächter besteht aus einem Bimetallstreifen, wobei dessen nicht festgeklemmtes Ende sich temperaturproportional biegt. Beim Überschreiten der zulässigen Wicklungstemperatur um 5°C wird durch das starke Biegen ein Kontakt mit Sprungverhalten geöffnet und der Motor wird ausgeschaltet, unabhängig davon, aus welchem Grunde die Temperaturerhöhung erfolgte. Nach dem Abkühlen der Wicklung um etwa 30°±15°C kann der Motor durch Drücken der Einschalttaste wieder eingeschaltet werden.

Die Kaltleiter Temperaturwächter wie in Figur 2 gezeigt bestehen aus einem Widerstandsfühler, bei dem beim Überschreiten der zulässigen Wicklungstemperatur um 5°C, von z.B. 140° C auf 145° C, eine sehr grosse Widerstandszunahme um mindestens eine Zehnerpotenz erfolgt, wonach durch das in den Motorschutzschalter eingebaute Auslösegerät ein Kontakt mit Sprungverhalten geöffnet wird, was den Motor ausschaltet. Dies ist der Fall, wenn der Motor um mehr als 2,5% überlastet wird, etwa bei einer zu hohen Motorumgebungstemperatur und wenn die Luftwege des Motorventilators durch Heu, Stroh, Sägemehl oder Staub verstopft sind. Nach dem Abkühlen der Wicklung um etwa 30°±15° C kann der Motor mit der Einschalttaste wieder eingeschaltet werden.

Der Nachteil bei der Temperaturüberwachung besteht in den höheren Kosten durch die in die Motorwicklung einzubauenden Temperaturwächter. Diese werden von allen Motorenfabriken zu einem Mehrpreis von etwa 70 Schweizer Franken eingebaut. Bei vorhandenen Motoren können durch Motorenwicklereien Temperaturwächter in die Wicklung eingebaut werden, was etwa 100 Schweizer Franken kostet. Der Preis für das Kaltleiter Auslösegerät liegt bei etwa 40 Schweizer Franken. Wegen der kleineren Ausfallquote durch überhitzte Wicklungen während der zweijährigen Garantiezeit und den dabei reduzierten Garantieansprüchen an den Motorlieferanten werden von immer mehr Motorenfabriken standardmässig Temperaturwächter in die Wicklungen sämtlicher Motoren eingebaut. Der Einstandspreis für drei in Serie geschaltete Temperaturwächter liegt bei 4 Schweizer Franken und für deren serienmässigen Einbau werden etwa 3 - 4 Minuten benötigt. Es gibt Lieferanten, die alle Drehstrommotoren im Leistungsbereich von 0,06 bis 750 kW ohne Mehrpreis mit eingebauten Kaltleiter Temperaturfühlern ausrüsten. Man ist also an einem bestmöglichen Motorschutz interessiert.

Um auch an die Motoren ohne eingebaute Wicklungstemperaturwächter die erfindungsgemässen Sterndreieck Motorschutzschalter anschliessen zu können, wurde auch der Einsatz des Motorschutzes mit Stromüberwachung vorgesehen und es wurde dafür ein Schaltschema nach **Figur 3** entwickelt. Bei der Stromüberwachung mittels Stromüberwachungs-Relais können die Motoren mit dem 1,05-fachen Motornennstrom belastet werden, wobei bei dauernder Überlast die Lebensdauer der Wicklung auf weniger als 50% reduziert wird. Erst bei einer Überlast mit dem 1,2-fachen Nennstrom wird der Motor innerhalb von 2 Stunden ausgeschaltet, wobei die Wicklungstemperatur während etwas mehr als einer Stunde auf über 200° C ansteigen kann, was eine reduzierte Wicklungslebensdauer zur Folge hat. Nach dem Ausschalten infolge der zwanzigprozentigen Überlast kann der Motor erst wieder eingeschaltet werden, wenn sich die Bimetallelemente abgekühlt haben. Da die Abkühlung der Motorwicklung viel träger ist als die der kleinen Bimetallelemente, kann der Motor schon eingeschaltet werden, wenn sich die Wicklung noch nicht auf 145° C abgekühlt hat, was wiederum die Lebensdauer der Wicklung beeinflusst. Der Motor wird aber nicht abgeschaltet bei einer zu hohen Motorumgebungstemperatur und wenn die Luftwege des Motorventilators durch Heu, Stroh, Sägemehl oder Staub verstopft sind.

Einige Fabrikanten von Drehstrommotoren hegen Vorbehalte gegen die Eignung von Bimetall-Temperaturwächtern, weswegen sie den Einbau der indirekt schaltenden Kaltleiter-Temperaturwächter mit dem dabei benötigten Auslösegerät bevorzugen. Hierzu ist Folgendes zu bemerken: Bezüglich der beiden Temperaturwächterarten werden in der Fachliteratur über die Bimetall-Fühlern zwei Punkte beanstandet: Erstens: Wegen des grossen Volumens sei die Zeit für den Wärmeübergang und das Ausschalten der überhitzten Wicklung beim Bimetallfühler verglichen mit der Wärmeübergangszeit des Kaltleiters viel zu lang. Durch die kleinen Dimensionen des Bimetallfühlers sei es schwierig, eine einwandfreie Arbeitsweise des eingebauten Kontaktes sicherzustellen. Es wurde von drei Drehstrommotoren mit 4kW, 11 kW und 22kW anhand der Erwärmungsprüfungs-Messdatenblätter die gemessene Zeit ermittelt, die vergeht, wenn bei Motor-Volllast läuft, nämlich ab dem Einschalten mit der Wicklungstemperatur = Raumtemperatur bis zum Ausschalten, wenn die Wicklungsübertemperatur nicht mehr weiter ansteigt. Die Wicklungsübertemperatur ist die Wicklungstemperatur minus die Raumtemperatur. Im Mittel betrug die Wicklungsübertemperatur 60°C, die Raumtemperatur 20°C und die Zeit für das Erreichen der Wicklungsübertemperatur 195 Minuten, das sind 195 / 60 = 3,25 Minuten je Grad Celsius. Der Motor soll bei einer Überlast auf 105% ausgeschaltet werden. Beim 1,05-fachen Motorstrom steigt die Temperatur im Quadrat mit dem Strom auf 1,05² auf die 1,1-fache Übertemperatur von etwa 60°C auf 66°C, also um 6°C. Bei 3,25 Minuten je Grad C hat der Motor eine Wärmeübergangszeit von 6 x 3,25 = 19,5 Minuten. Die Bimetallfühler weisen eine Wärmeübergangszeit von etwa einer Minute auf und bei den Kaltleitern mit dem dazu gehörenden Kaltleiter-Auslösegerät beträgt diese 10-20 Sekunden. Wenn also bei der beim Motor vorhandenen Wärmeübergangszeit von 19,5 Minuten ein Kaltleiter Temperaturfühler mit 10 bis 20 Sekunden Wärmeübergangszeit verlangt wird, so ist das ebenso unsinnig wie einen Sportwagen-Motor in einen Traktor einzubauen. Bezüglich der sicheren Arbeitsweise des in die Bimetallfühler eingebauten Kontaktes wurden in den letzten 20 Jahren grosse Fortschritte erreicht. So waren die beiden im Jahre 2004 auf dem Mars gelandeten Roboterfahrzeuge mit je 39 Gleichstrommotoren der Firma Maxon in CH-Sachseln ausgerüstet. Diese waren klein und leicht und hatten einen Wirkungsgrad von bis zu 90%. Der kleinste von der Firma Maxon gebaute Gleichstrommotor hat einen Durchmesser von 6mm. Sicher ist es weit schwieriger, bei einem Gleichstrommotor mit dem Durchmesser von 6mm die Wicklung und die Lager zu gestalten, als bei einem Bimetallfühler mit dem Durchmesser von 9mm für die Bimetallscheibe und die Kontakte eine betriebssichere Funktion zu erreichen. Gemäss den Angaben der Firma Thermik erfüllen die Bimetall-Temperaturwächter die höchsten Anforderungen an Sicherheit und Qualität. An Kunden aller fünf Kontinente wurden mehr als 2,5 Milliarden Thermik-Produkte geliefert. In Zukunft sollten die Bimetall Temperaturwächter in die Wicklungen aller Drehstrommotoren eingebaut werden. Gegenüber dem Bimetall-Temperaturwächter hat der Kaltleiter Temperaturwächter den Nachteil, dass er indirekt schaltet und ein Auslösegerät in den Schalter eingebaut werden muss, was den Preis und die Dimensionen beeinflusst, wobei ein nicht vorhandenes Auslösegerät nie ersetzt werden muss.

Die erfindungsgemässen Sterndreieck Motorschutzschalter bringen die im Folgenden beschriebenen grossen Vorteile: Der Hauptvorteil liegt im tiefen Preis dieser Schalteranordnung. Durch die Verwendung der für andere Anwendungen in grossen Serien hergestellten Teile und Komponenten und wegen den Vorteilen der neuen Schützenschaltungen liegt der Preis dieser Schalter um mehr als 50% unter dem Preis der bisherigen Sterndreieck Motorschutzschalter mit Handhebelbetätigung.

Mit den Schützenschaltungen werden das Stern- und das Dreieckschütz mit stromlosen Kontakte eingeschaltet, und sie können mit einem grösseren Strom belastet werden und stattdessen können kleinere, preisgünstigere Schützen eingebaut werden. Dadurch wird nebst der Dimension auch der Preis reduziert. Auch werden die mit dem Sternschütz zu erstellenden Sternverbindungen mit nur 2 x 2 statt bisher mit 3 x 2 Hauptstromkontakten geschaltet und dadurch können gegenüber bisher zwei Steuerstromkontakte eingespart werden. Wie beim Dreieck-und Netzschütz kann auch hier ein Schütz mit drei Hauptstrom- und einem Steuerstrom Kontaktpaar verwendet werden.

Die Lebensdauer der bisherigen Schalter beträgt 20'000 Schaltungen. Bei 12 Einschaltungen pro Stunde und über 8 Stunden je Tag, bei 5 Tagen je Woche und bei 52 Wochen pro Jahr ergibt das 24'960 Einschaltungen pro Jahr. Bei einer Lebensdauer von 20'000 Schaltungen ergibt das bei den bisherigen Schaltern 20'000 / 24'960 = 0,8 Jahre. Die Lebensdauer der mit Schützen ausgerüsteten Schalter beträgt hingegen 300'000 Schaltungen! Das sind 300'000 / 24'960 = 12 Jahre oder das 15-fache der Lebensdauer der bisherigen handbetätigten Sterndreieck Motorschutzschalter.

Der hier beschriebene Sterndreieck Motorschutzschalter kann elegant in ein besonderes Gehäuse für Motorschutzschalter" eingebaut werden, welches verschiebbare Befestigungslöcher aufweist, sodass das Gehäuse ohne mechanische Nacharbeiten und daher mit minimalem Zeitaufwand auf die Klemmen-Kastenrahmen der Drehstrommotoren verschiedener Fabrikate, Baugrössen, Bauformen und Leistungen aufschraubbar ist. Dieses Gehäuse ist Gegenstand einer gesonderten Patentanmeldung. Die Herstellkosten liegen dank der Möglichkeit, einfache Schützen einzusetzen und Komponenten zu verwenden, die in grossen Stückzahlen hergestellt werden, um mehr als 50% unter dem Preis der bisherigen Sterndreieck Motorschutz-Schalter.

Für den Markt der Sterndreieck Motorschutzschalter liegen keine Angaben über deren Jahresumsatz vor. Aus verschiedenen Quellen ist aber der Umsatz für Drehstrommotoren bekannt. Er liegt für Europa bei zwei Milliarden Schweizer Franken. Jeder Drehstrommotor wird mit einem Motorschutzschalter ein- und ausgeschaltet. Sicher werden mehr als zehn Prozent der Drehstrommotoren mit einem Sterndreieck Motorschutzschalter betrieben. Bei 10% ergibt das für Europa allein etwa 200 Millionen Schweizer Franken Jahresumsatz, für die Schweiz, zusammen mit den vier angrenzenden Länder, liegt dieser bei etwa 100 Millionen Schweizer Franken.

## Patentansprüche

1. Verfahren zum Einschalten eines Drehstrommotors mit einem Sterndreieck Motorschutz-Schalter mit automatischer Umschaltung von Stern- auf Dreieckschaltung, **gekennzeichnet durch** folgende Schritte:
a) Einschalten des Sternschütz mit stromlosen Kontakten,
b) Einschalten des Netzschütz mit stromführenden Kontakten, wonach der Motor mit der am Zeitrelais eingestellten Hochlaufzeit auf etwa 80% der Nenndrehzahl hochläuft,
c) Ausschalten des Sternschütz und des Netzschütz **durch** das Zeitrelais,
d) Einschalten des Dreieckschütz mit stromlosen Kontakten,
e) Einschalten des Netzschütz mit stromführenden Kontakten, wonach der Motor auf seine Nenndrehzahl hochläuft.

2. Verfahren zum Einschalten eines Drehstrommotors mit einem Sterndreieck Motorschutz-Schalter mit automatischer Umschaltung von Stern- auf Dreieckschaltung nach Anspruch 1, **gekennzeichnet durch** folgende Schritte:
a) mit Drücken der Einschalttaste "I" werden die Glimmlampe, das Halterelais und das Zeitrelais eingeschaltet, wodurch infolge des eingeschalteten Halterelais der Steuerstrom für die Schützen und Relais eingeschaltet bleibt, auch wenn die Einschalttaste "I" losgelassen wird, und **durch** das Einschalten des Zeitrelais beginnt nur dessen Zeituhr zu laufen, während die geschlossenen Zeitrelaiskontakte 15-16 geschlossen bleiben und über diese wird das Sternschütz K2 mit stromlosen und funkenfreien Kontakten eingeschaltet und die Wicklungsenden werden mit nur zwei Kontaktpaaren zu einem Sternpunkt verbunden;
b) **durch** das Sternschütz wird das Netzschütz mit einem Anlaufstrom von bis zum dreifachen Motornennstrom eingeschaltet, und es werden die drei Wicklungsanfänge mit den Netzzuleitungen verbunden und der Motor läuft bis auf etwa 80% seiner Nenndrehzahl hoch;
c) nach dem Ablauf der am Zeitrelais eingestellten Hochlaufzeit wird **durch** dieses das Sternschütz ausgeschaltet und **durch** das Sternschütz wird auch das Netzschütz ausgeschaltet, wobei die Verbindungen zu den drei Netzzuleitungen unterbrochen werden;
d) nur 50 Millisekunden nach dem Ausschalten des Sternschütz wird **durch** das Zeitrelais über die Sternschützkontakte das Dreieckschütz mit stromlosen Kontakten eingeschaltet und es werden die Wicklungsanfänge mit den Wicklungsenden zu einer Dreieckschaltung verbunden, und nach dem Ausschalten des Sternschütz bewirken dessen geschlossene Steuerstrom Öffnerkontakte eine elektrische Einschaltsperre, wodurch das Dreieckschütz erst einschaltbar ist, wenn das Sternschütz ganz ausgeschaltet ist;
e) **durch** das eingeschaltete Dreieckschütz wird das Netzschütz mit einem Umschaltstrom von bis zum vierfachen Motornennstrom eingeschaltet und es werden die drei Wicklungsanfänge mit den Netzzuleitungen verbunden und der Motor läuft auf seine Nenndrehzahl hoch.

3. Verfahren zum Einschalten eines Drehstrommotors mit einem Sterndreieck Motorschutz-Schalter mit automatischer Umschaltung von Stern- auf Dreieckschaltung nach einem der Ansprüche 1 bis 2, **dadurch gekennzeichnet, dass** zum Ausschalten des Motors durch Drücken der Ausschalttaste "0" die Schützen, die Relais, die Glimmlampe und der Motor ausgeschaltet werden, unabhängig vom Betriebszustand bei der Ausschaltung.

4. Sterndreieck Motorschutz-Schalter mit automatischer Umschaltung von Sternauf Dreieckschaltung zum Betreiben des Verfahrens nach einem der Ansprüche 1 bis 3, **dadurch gekennzeichnet, dass** die Schützen so geschaltet sind, dass das Stern- und das Dreieckschütz mit stromlosen Kontakten einschaltbar sind, wodurch diese mit einem grösseren Strom belastbar sind und daher Stern- und Dreieckschützen mit dieser Schaltung eingebaut sind.

5. Sterndreieck Motorschutz-Schalter mit automatischer Umschaltung von Sternauf Dreieckschaltung nach Anspruch 4, **dadurch gekennzeichnet, dass** für das Sternschütz eine Schaltung eingesetzt ist, mit der nur 2 x 2 Hauptstromkontakte für die Erstellung der Sternverbindungen vorliegen, wobei die 2 freigewordenen Hauptstromkontakte als Steuerstromkontakte eingesetzt sind, wodurch das Sternschütz wie das Dreieck- und das Netzschütz in der Standardausführung mit 3 x 2 Hauptstromkontakten und 1 x 2 Steuerstromkontakten einbaubar ist, und wodurch ein Standardschütz mit nur einem Steuerstrom-Kontaktpaar einsetzbar ist, wie beim Dreieck- und Netzschütz.

6. Sterndreieck Motorschutz-Schalter mit automatischer Umschaltung von Sternauf Dreieckschaltung nach einem der Ansprüche 4 bis 5, **dadurch gekennzeichnet, dass** er in ein Schaltergehäuse, in ein Tableau, in einen Schaltschrank oder in einen Schaltkasten einer Maschinen eingebaut ist.

7. Sterndreieck Motorschutz-Schalter mit automatischer Umschaltung von Sternauf Dreieckschaltung nach einem der Ansprüche 4 bis 6, **dadurch gekennzeichnet, dass** der Motorschutz durch Temperaturüberwachung realisiert ist, mit Abschaltung, sobald die zulässige Wicklungstemperatur um mehr als 5° C überschritten ist, und Wiedereinschaltung mittels Einschalttaste erst möglich ist, wenn die Wicklung um 30° C ± 15° C abgekühlt ist.

8. Sterndreieck Motorschutz-Schalter mit automatischer Umschaltung von Sternauf Dreieckschaltung nach einem der Ansprüche 4 bis 6, **dadurch gekennzeichnet, dass** bei einem Motorschutz durch Stromüberwachung der Motor bei einer anhaltenden Überlast auf den 1,2-fachen Nennstrom ausschaltbar ist, und mit der Einschalttaste erst nach Abkühlen der Bimetallstreifen des Bimetallrelais wieder einschaltbar ist.

9. Sterndreieck Motorschutz-Schalter mit automatischer Umschaltung von Sternauf Dreieckschaltung nach einem der Ansprüche 4 bis 8, **dadurch gekennzeichnet, dass** der Motorschutz-Schalter in ein besonderes Gehäuse eingebaut ist, welches verschiebbare Befestigungslöcher aufweist, sodass das Gehäuse ohne mechanische Nacharbeiten und daher mit minimalem Zeitaufwand auf die Klemmen-Kastenrahmen der Drehstrommotoren verschiedener Fabrikate, Baugrössen, Bauformen und Leistungen aufschraubbar ist.
